# EUROPEAN PATENT APPLICATION

(11) **EP 0 978 335 A1**
(43) Date of publication of application: **09.02.2000**
(21) Application number: 99202330.9
(22) Date of filing: 15.07.1999
(51) Int. Cl.: B21D 43/14

(54) **Rotator for a machine for machining metal sheets**

(30) Priority: 06.08.1998 IT MI981851
(71) Applicant: SALVAGNINI ITALIA S.p.A., I-36040 Sarego (Vicenza) (IT)
(72) Inventor: Venturini, Gianfranco, 37044 Cologna Veneta (Verona) (IT); Cinel, Luciano, 36030 S. Vito di Leguzzano (Vicenza) (IT)
(74) Representative: Mittler, Enrico

(57) **Abstract**

A rotator for a machine for machining metal sheets comprises metal sheet gripping and rotating means (2, 3, 5-9) for positioning a metal sheet (4) in a plurality of allowed angle positions around an axis perpendicular to it. Centering and clamping means (10-18; 10, 11, 13, 40-46; 30-39) for said sheet (4) are provided to center and clamp the sheet in any one of said angle positions. The centering and clamping means (10-18; 10, 11, 13, 40-46; 30-39) include a cog wheel (10; 30), that is rotatable fixedly to said sheet (4) and comprises a number of teeth equal to the number of said allowed angle positions, means (12; 40; 32) for engagement with said cog wheel (10; 30) that are provided with a toothing complementary to, and suitable to engage with at least one part of, the teeth of said cog wheel (10; 30) in order to determine precise centering and stable clamping of the metal sheet (4) in any one of the allowed angle positions.

## Description

The present invention refers to a rotator for a machine for machining metal sheets.

In the current machines for machining metal sheets, either if they are punching machines or bending machines, a rotator is provided, that has the function to automatically position the metal sheet during the different operations of machining (for instance bending, punching or shearing of the corners).

A typical structure of the rotator includes a bearing structure to which a pair of jaws is mounted, of which, generally the lower one, is fixed in height but it can rotate since it is connected to a shaft that is driven in turn by a motor, while the other jaw, generally above, is instead idle to the rotation, but it is vertically slidable, always as a consequence of an opportune drive.

The pair of jaws, comprising the control for the lifting/lowering of a jaw and for the rotation of the other, makes up the real rotator.

The jaw that slides vertically, gets near the other jaw in such a way so as to clamp the metal sheet to be machined, and therefore the rotation of the second jaw, that drags the first idle jaw, allows to rotate the metal sheet in the work top.

The motor that controls the rotation of the lower jaw is generally provided with an encoder, and it is therefore capable to determine rotations by pre-established angles.

A rotator structure of this kind works in satisfactory manner in case there are a limited number of angle positions allowed for the metal sheet (for instance four, one position for each side of the sheet) and if there is no need for a high precision in the angle positioning of the same sheet.

Instead, in case one wishes obtain a greater number of angle positions to be taken by sheet for one or more particular machinings, or one requires a clamping of the sheet with a certain precision, during one of the previous positionings, a rotator like the one described previously does not guarantee a sufficient reliability because of the inevitable angle clearance between the teeth of the transmission.

In view of the state of the technique herein described, object of the present invention is to provide for a rotator for a machine for machining metal sheets, capable to resolve the aforesaid problems.

According to the present invention, such object is reached by means of a rotator for a machine for machining metal sheets, comprising metal sheet gripping and rotating means for positioning said sheet in a plurality of allowed angle positions around an axis perpendicular to said sheet, characterized in that it comprises means for centering and clamping said sheet so as to center and clamp the sheet in any one of said angle positions, said centering and clamping means comprising a cog wheel, that is rotatable integrally with said sheet and comprises a number of teeth equal to the number of said allowed angle positions, means for engagement with said cog wheel that are provided with a toothing complementary to, and suitable to engage with at least one part of, the teeth of said cog wheel in order to determine precise centering and stable clamping of said metal sheet in any one of said allowed angle positions.

The characteristics and the advantages of the present invention will become evident from the following detailed description of three embodiments thereof, that are illustrated as non limiting examples in the enclosed drawings, in which:
Figure 1 is an axonometric view of a rotator according to a first embodiment of present invention;
Figure 2 is a sectional view of the lower part of the rotator of Figure 1 according to a longitudinal plane;
Figures 3 to 5 show, in magnified scale, a section according to line III-III of figure 2, at three different operating stages;
Figure 6 shows a detail of Figure 5 in magnified scale;
Figure 7 shows a centering and clamping comb according to a second embodiment of the present invention;
Figure 8 is a sectional view of the lower part of a rotator according to a third embodiment of the present invention along a longitudinal plane;
Figures 9 to 11 show a section according to line IX-IX of Figure 8, at three different stages of operation, in magnified scale.

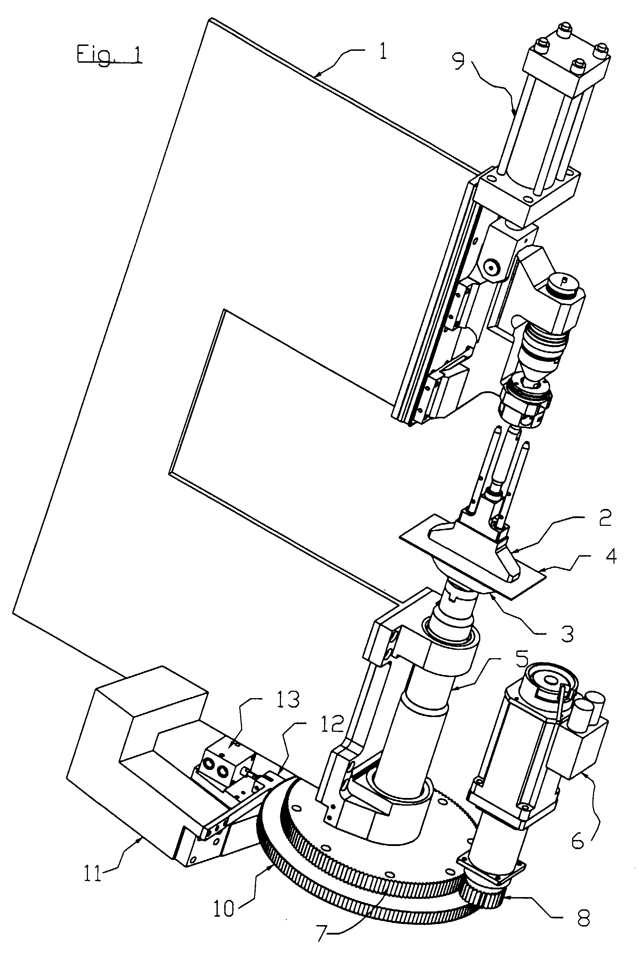

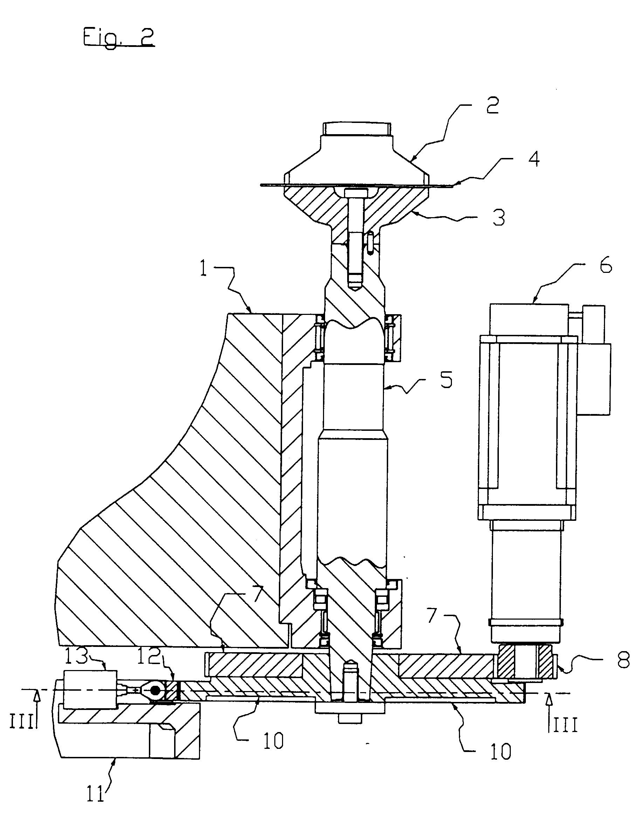

In Figures 1 and 2 there is shown a rotator according to a first embodiment of the present invention, comprising a bearing structure 1 with a substantially "⊂" shape with central concavity suitable to contain a metal sheet (a portion of which is identified by the reference 4) without interfering. At the two ends of the structure 1 a pair of jaws 2, 3 is mounted, of which the lower jaw 3 is fixed in height, but can rotate since it is connected with a shaft 5 that is operated in turn by a motor 6 by means of the gear of a cog wheel 7 with a pinion 8, at a contact. However the rotation of the lower jaw 3 can be determined by other transmissions, as for example transmissions with chains or with belts.

The upper jaw 2 is instead idle to rotation, but it is vertically slidable owing to a proper drive, for instance a hydraulic or pneumatic piston 9.

The upper jaw 2 can descend toward the lower jaw 3 in order to clamp the metal sheet 4 to be machined (shown in reduced dimensions for a better reading of the drawings), and therefore the subsequent rotation of the lower jaw 3, that drags the upper idle jaw 2, allows to rotate the metal sheet 4 in the proper work plane.

On the lower part of the cog wheel 7, coaxially and fixedly to it, a cog wheel 10 for precision centering is provided, that has a high number of teeth (for instance 180, 360 and so on, as a function of the angle positions that one wants the sheet 4 to take) that are arranged tangentially.

A second structure 11, comprising a centering and clamping comb 12 with respective drive device 13 is fixed to the structure 1. The centering and clamping comb 12 can slide radially and couple with the centering cog wheel 10, thus carrying out centering and at the same time precise and stable clamping.

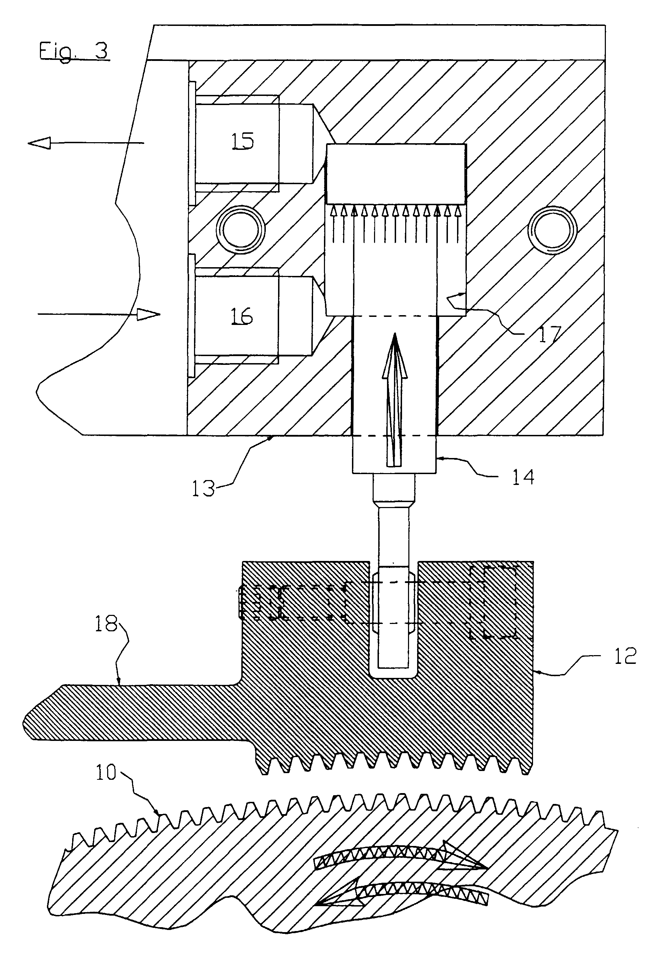

In order to better understand the operation of the rotator according to the first embodiment of the present invention, particularly of the "refined" centering and clamping system provided in such rotator, we can refer to Figures 3 to 5, in which parts of the centering and clamping mechanism is shown at three different operating stages.

In Figure 3 the clamping comb 12 can be observed that is not in contact with the centering cog wheel 10. In order to obtain such uncoupling between comb 12 and cog wheel 10, a double drive piston 14, connected with the comb 12, is made slide in a respective cylinder 17, by input of pressurised oil in the aforesaid cylinder 17, through an input chamber 16. The thrust created by the oil flow moves the piston 14 along an axial direction of the cylinder 17, allowing the movement of the comb 12 away from the cog wheel 10. The cylinder 17 is provided with a second input chamber 15 from which, during this operating stage, the oil contained in the part of the cylinder 17, that is subject to the pressure of the piston 14, outflows.

During this stage, therefore, no clamping of the metal sheet 4 is provided, and the latter can rotate in one sense or in the other, being the cog wheel 10 free to rotate under the control of the motor 6.

The comb 12 as regards the fixed structure 11 to which it is connected has a movement that is determined by the flexure of its connection rod 18.

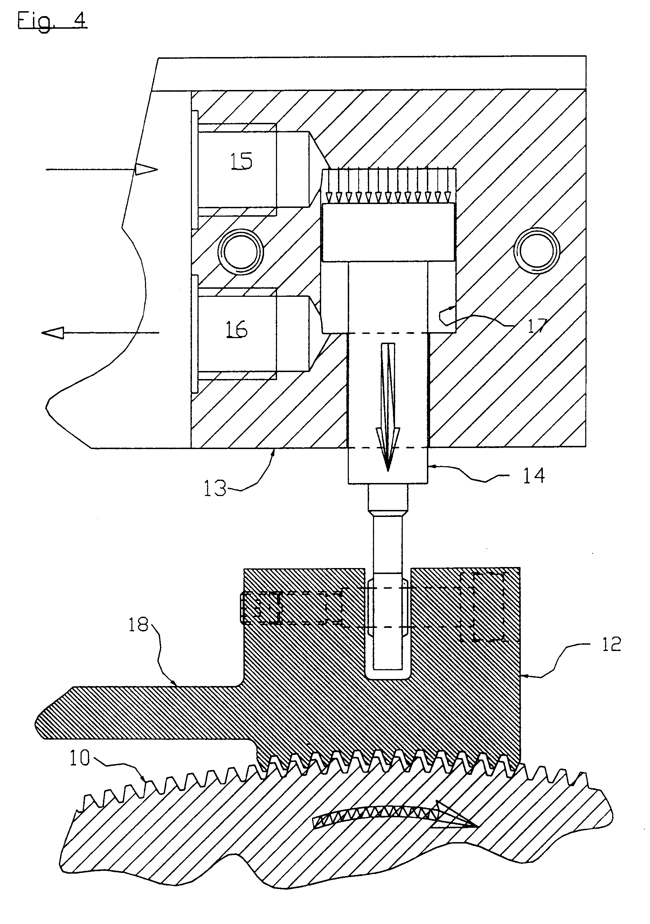

In Figure 4 an intermediate stage is rendered in which the comb 12 approaches the centering cog wheel 10, thus coupling with the sides of the teeth of the same. The movement of the comb 12 is determined by the drive of the piston 14, that is activated in turn by the thrust of oil in pressure that enters the cylinder 17 from the input chamber 15, while from the other input chamber 16 other oil in pressure outflows, due to the thrust of the same piston. As the comb 12 approaches the wheel 10, the rod 18 becomes less and less subject to flexure, thus going back to the position of rest.

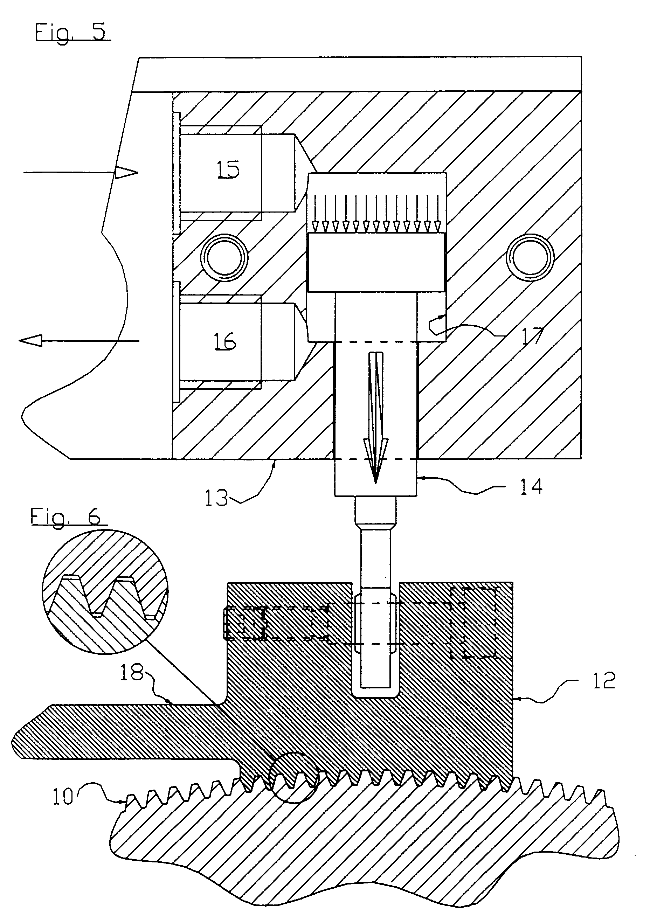

In figure 5 the final stage in which the centering and clamping of the cog wheel 10 is obtained owing to the perfect coupling with the comb 12 is shown. The pressurised oil incoming from the input chamber 15 determines the additional movement of the piston 14 inside the cylinder 17, and as a consequence the approach of the comb 12 to the wheel 10.

In this final position, the rod 18 is not subject to flexure any more, having reached a condition of rest. The reliability of the coupling between wheel 10 and comb 12 is guaranteed by the thrust of the piston 14.

In obtaining the perfect coupling between the teeth of the comb 12 and the ones of the wheel 10, a recovery of the clearances takes place, thus obtaining an excellent final clamping and centering position. In order for this to occur the teeth of the cog wheel and of the comb 12 must have tilted sides, as it is shown in figure 6.

In order to prevent clearances in the clamping position of the comb 12, the rod 18 must be fixed to the structure 11 (for instance joint by means of bolts).

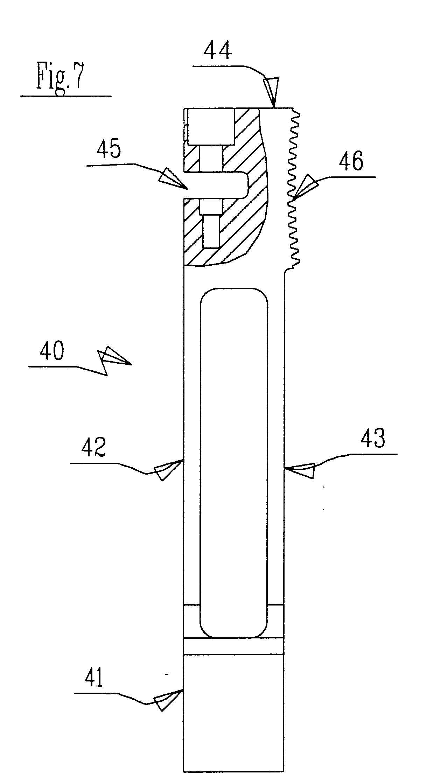

In Figure 7 a centering and clamping comb 40 according to a second embodiment of the present invention is shown. The comb 40 is similar to the comb 18 of the first embodiment, but it differs from it because of the presence of two connection rods 42 and 43 instead of the single rod 18.

The comb 40 must be fixed to the structure 11 at one end 41, for instance by means of bolts. A block 44 with a toothing 46 suitable to the coupling with the wheel 10 is found at the other end. The driving piston 14 is connected to the comb 40 by means of engagement in a cavity 45.

Owing to the symmetry of the structure of the comb 40 and to the high relation between flexing rigidity of the block 44 and flexing rigidity of the rods 42 and 43, the block 44, when it is displaced by the piston 14 during the stage of movement away or of approach to the wheel 10, is not subject to any rotation on itself, but it only undergoes sliding. In this way there is a better centering of the wheel 10 and in addition all the teeth of the comb 40 work simultaneously, with an excellent share of the work load.

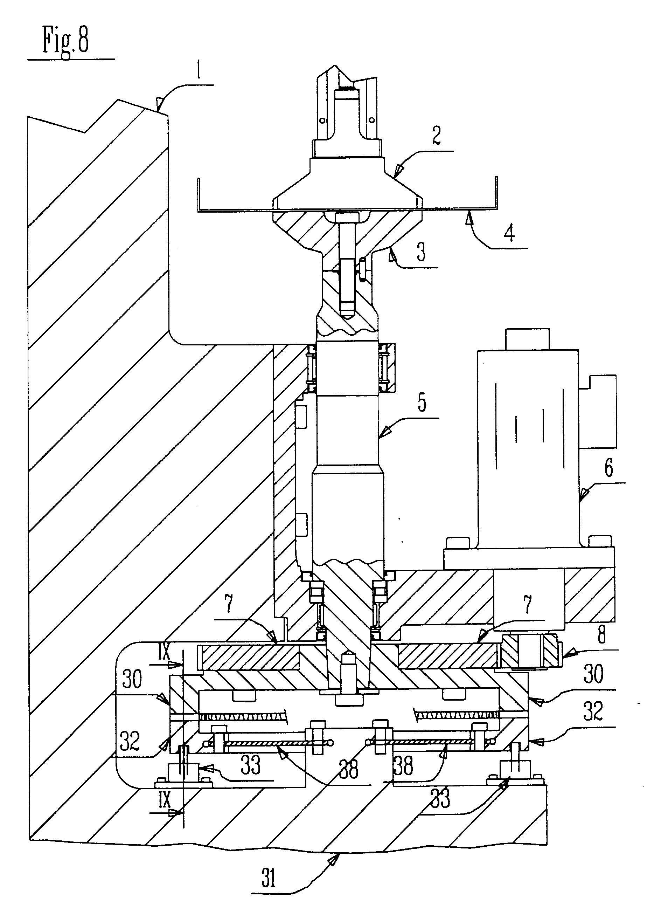

Figure 8 shows a third embodiment of the present invention. The upper part of the rotator of Figure 8 is similar to the one shown in Figures 1 and 2: the difference as regards the first embodiment consists in the mechanism by which the centering and clamping of the rotator is obtained.

Similarly to Figure 2, in Figure 8 a rotator comprising a structure 1 with central concavity suitable to contain a metal sheet 4 is shown. At the two ends of the bearing structure 1 a pair of jaws 2, 3 is mounted, of which the lower jaw 3 is fixed in height, but can rotate since it is connected by means of the gear of two contact cog wheels 7, 8 to a shaft 5 that is driven in turn by a motor 6. The rotation of the lower jaw 3 can however be determined by other transmissions, as for instance transmissions with chains or with belts.

Unlike in Figure 2, on the lower part of the cog wheel 7, coaxially and fixedly to it, a first centering wheel 30 with front toothing, with a high number of teeth arranged frontally is provided. As in the previous embodiment, the number of teeth can be equal to 180 or 360, as a function of the angular resolution that it is wanted for the rotation of the sheet 4.

A second structure 31, comprising a second wheel with front toothing 32, with relative driving device 33 is fixed or comprised in the structure 1. The second wheel with front toothing 32 can slide vertically and couple with the first wheel with front toothing 30, thus causing centering and clamping in a precise and stable manner. Between the second wheel with front toothing 32 and the fixed structure 31 an elastic coaxial coupling disk 38 is provided.

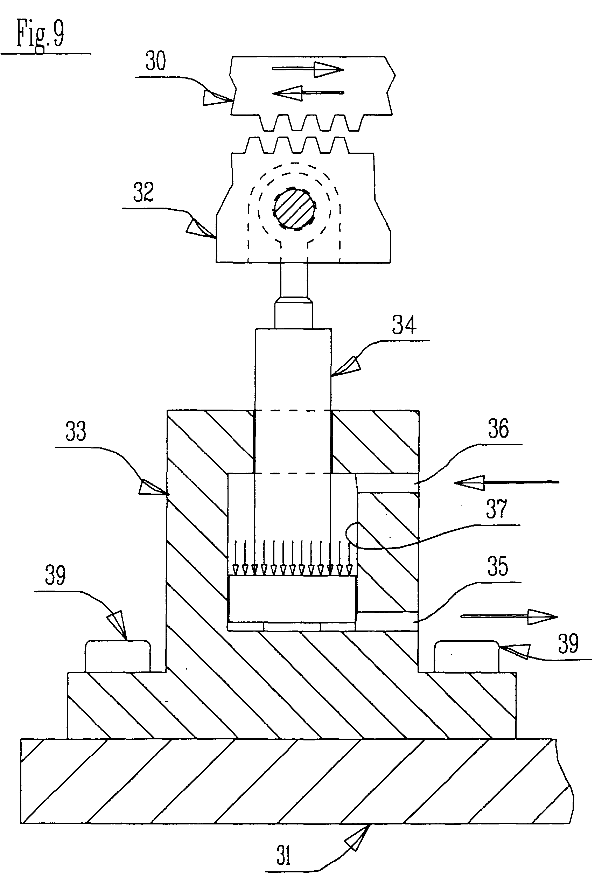

In order to better understand the operation of the rotator according to the second embodiment of the present invention, in particular of the "refined" centering and clamping system provided by this rotator, we can refer to Figures 9 to 11, in which parts of the clamping mechanism are shown at three different operating stages.

In Figure 9 it is possible to observe the second wheel with front toothing 32 that is not in contact with the first centering wheel with front toothing 30. In order to obtain an uncoupling of this type between the two cog wheels, a piston 34, connected with the second wheel with front toothing 32, is made slide in a respective cylinder 37, by means of the input of pressurised oil in the aforesaid cylinder 37, through an access way 36. The thrust created by the flow of oil moves the piston 34 along an axial direction of the cylinder 37, thus allowing the movement of the second wheel with front toothing 32 away from the first wheel with front toothing 30. The cylinder 37 is provided with a second access way 35 from which, during this operating stage, the oil contained in the part of the cylinder 37 that is subject to the pressure of the piston 34 outflows.

Therefore during this stage, no clamping of the metal sheet 4, that can be made rotate in a sense or in the other is provided, since the cog wheel 30 is free to move.

The frontal cog wheel 32 is connected with the fixed structure 31 by means of an elastic thin plate 38, which is subject to elastic flexure during the uncoupling of the two wheels with front toothing.

For action symmetry requirements at least three equidistant cylinders 33 are provided, that are positioned so as to operate the wheel 32.

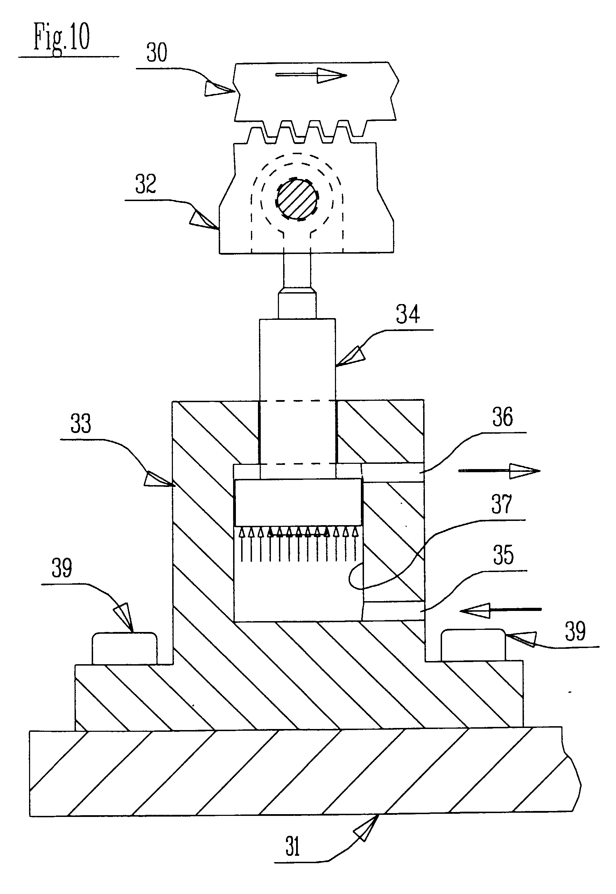

In Figure 10 an intermediate stage is rendered in which the wheel with front toothing 32 approaches the wheel with front centering toothing 30, thus coupling with the sides of the teeth of the same. The movement of the wheel 32 is determined by the drive of the piston 34, that is activated in turn by the thrust of pressurised oil incoming in the cylinder 37 from the access way 35, while from the other access way 36 other oil in pressure outflows, owing to the thrust of the same piston. The elastic thin plate 38 becomes less and less subject to elastic flexure, thus bringing itself in a condition of rest, as soon as the two wheels 30 and 32 get near each other.

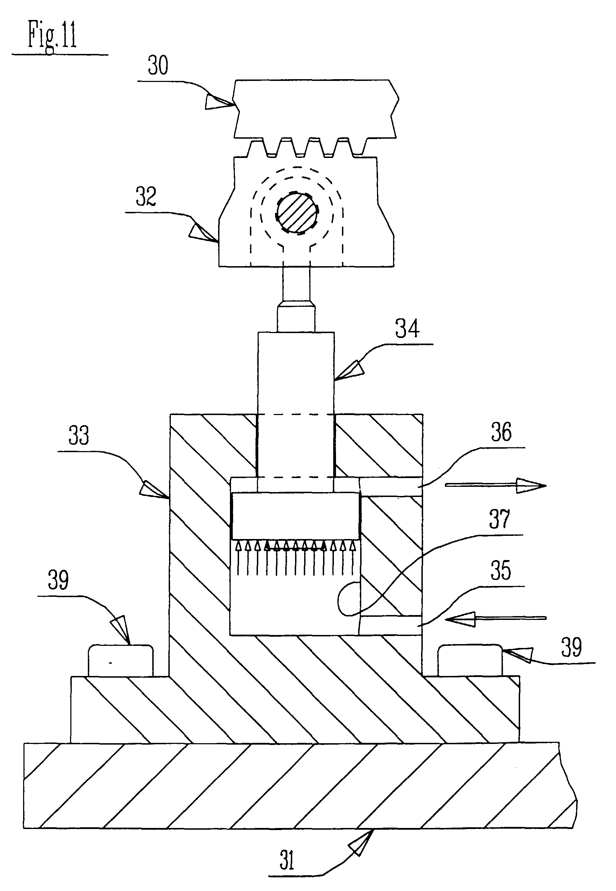

In Figure 11 the final stage in which the centering and clamping of the wheel with front toothing 30 is obtained owing to the perfect coupling with the wheel with front toothing 32 is shown. The pressurised oil incoming from the access way 35 determines the further movement of the piston 34 inside the cylinder 37, and as a consequence the approach of the two wheels.

In obtaining the perfect coupling between the teeth of the wheel 32 and the ones of the wheel 30, there is a recovery of the clearances, thus obtaining an excellent final centering and clamping position. In order for this to occur the teeth of the two wheels 30 and 32 must have tilted sides.

In this final position of coupling the elastic thin plate 38 is not subject to elastic flexure any more, having reached a condition of rest, and the reliability of the coupling between the wheels 30 and 32 is guaranteed by the thrust of the hydraulic cylinders 33.

## Claims

1. Rotator for a machine for machining metal sheets, comprising metal sheet gripping and rotating means (2, 3, 5-9), for positioning a metal sheet (4) in a plurality of allowed angle positions around an axis perpendicular to said sheet (4), characterized in that it comprises centering and clamping means (10-18; 10, 11, 13, 40-46; 30-39) for said sheet (4) for centering and clamping the sheet in any one of said angle positions, said centering and clamping means (10-18; 10, 11, 13, 40-46; 30-39) comprising a cog wheel (10; 30), revolving fixedly to said sheet (4) and comprising a number of teeth equal to the number of said allowed angle positions, means for engagement (12; 40; 32) with said cog wheel (10; 30) that are provided with a toothing complementary to, and suitable to engage with at least one part of, the teeth of said cog wheel (10; 30) in order to determine precise centering and stable clamping of said metal sheet (4) in any one of said allowed angle positions.

2. Rotator according to claim 1, characterized in that said engagement means comprise a comb (12; 40) provided with said complementary toothing, that can be operated by means of an actuator (13-17) and slidable in a direction substantially radial to said cog wheel (10), so that during the centering and clamping stage, after the sheet (4) has been positioned in any one of said allowed angle positions, it engages a part of the teeth of said cog wheel (10).

3. Rotator according to claim 2, characterized in that said comb (12; 40) is connected to a fixed structure (11) by means of coupling means (18; 41-43) that during the substantially radial sliding of said comb (12; 40) for movement away from said cog wheel (10) are subject to flexure.

4. Rotator according to claim 3, characterized in that said coupling means comprise a rod piece (18) for the connection to said comb (12).

5. Rotator according to claim 3, characterized in that said connection means comprise at least two rods pieces (42, 43) for connection to said comb (40).

6. Rotator according to any one of the claims from 2 to 5, characterized in that said actuator (13-17) comprises a double drive piston/cylinder (14, 17), with respective drive devices (13, 15-17).

7. Rotator according to claim 1, characterized in that said cog wheel (30) is provided with a first front toothing and said engagement means (32) comprise a centering wheel (32) with a second front toothing complementary to said first front toothing, said centering wheel (32) being operated by an actuator (33-39) and slidable along the axial direction of said cog wheel (30) so that, during the centering and clamping stage after the sheet (4) has been positioned in any one of said allowed angle positions, the teeth of said second front toothing engage in the teeth of said first front toothing.

8. Rotator according to claim 7, characterized in that said actuator (33-39) comprises a piston/cylinder (34, 37) with respective drive devices (33, 35-39).

9. Rotator according to any one of the claims 7 and 8, characterized in that said centering wheel (30) is coaxially connected with a fixed structure (31) by elastic coupling means (38).

10. Rotator according to any one of the previous claims, characterized in that it comprises a bearing structure (1) and that said gripping and rotating means (2, 3, 5-9) comprise a first jaw (3) that is mounted to said bearing structure (1) and that can be rotated around its own axis, a second jaw (2) mounted to said bearing structure (1) and slidable along a direction parallel to said axis under the control of a respective actuator (9) so as to cooperate with said first jaw (3) in clamping of said metal sheet (4), movement means (6, 8, 7, 5) to determine the rotation of said first jaw (3) around said axle and the consequent positioning of the metal sheet (4) in a plurality of pre-established angular positions.
